# EUROPEAN PATENT APPLICATION

(11) **EP 3 124 927 A1**
(43) Date of publication of application: **01.02.2017**
(21) Application number: 15306238.5
(22) Date of filing: 30.07.2015
(51) Int. Cl.: G01K 1/14, G01B 5/00

(54) **A PORTABLE PROBE UNIT FOR TEMPERATURE MEASURING**

(71) Applicant: Aktiebolaget SKF, 415 50 Göteborg (SE)
(72) Inventor: SOWKA, Axel, 59135 WALLERS (FR); DUBRULLE, Pierre, 59300 AULNOY-LES-VALENCIENNES (FR)
(74) Representative: Tweedlie, Diane Harkness

(57) **Abstract**

A portable probe unit comprising:
a temperature probe (9) having a temperature sensor (18),
a body (2) having a front face (4) and equipped with a magnet (20) able to couple the body with a piece (22) of a magnetic material and to maintain, in a coupled position, the front face (4) of the body (2) in contact on a surface (23) of the piece (22), and
a carrier (8) mounted movable with respect to the body (23) and carrying the temperature probe (9) in such a way that, in said coupled position, the temperature sensor (18) is in contact on the piece (22) under the effect of a spring means (14) installed between said movable carrier (8) and said body (2).

## Description

The present invention relates to the field of the measure of sizes of pieces, such as the measure of diameters of rings of bearings.

It is known to realize the measure of a size of a piece taking into account the temperature of the piece placed generally in ambient atmosphere and regarding a reference size of a reference sample at a determined temperature.

For realizing the measure of the temperature of the piece, it is current to use a thermocouple probe that is placed against the piece and maintained with an adhesive tape or with tongs.

An object of the present invention is to improve the measurement of the temperature of a piece and to use the value of the measured temperature in a process of the measure of a size of a piece.

According to one embodiment, it is proposed a portable probe unit comprising a temperature probe having a temperature sensor, a body having a front face and equipped with a magnet able to couple the body with a piece of a magnetic material and to maintain, in a coupled position, the front face of the body in contact on a surface of the piece, and a carrier mounted movable with respect to the body and carrying the temperature probe in such a way that, in said coupled position, the temperature sensor is in contact on the piece under the effect of a spring means installed between said movable carrier and said body.

In consequence, the positioning by a user and the contact of the temperature sensor with respect to the piece receiving the probe unit is guaranteed.

Said body and said carrier can comprise abutting means, which abut under the effect of the spring means when said body is in a released position in which the temperature sensor extends beyond the said front face of said body.

Said carrier can be mounted for sliding with respect to said body.

Said carrier can comprise a tube mounted for sliding along a passage of said body, the temperature probe extending in said tube and the temperature sensor being maintained by an encapsulating material in said tube.

Said temperature sensor can extend at least partially beyond one end of said tube.

Said body can comprise a cavity in which said spring means is installed around said tube.

Said temperature sensor can be formed by a welding drop connected wires of a thermocouple, these wires extending in said tube.

According to another embodiment, it is proposed a measuring equipment comprising, on a table, two positioning stops and an electro-mechanical probe, a ring being able to be placed on the table in a position such that a peripheral surface of the ring is in contact with said positioning stops and the electro-mechanical probe, and comprising said portable probe unit, able to be coupled to the ring in such a position that said temperature sensor is in contact with a radial face of the ring, the equipment comprising further a computer connected to said temperature probe and said electro-mechanical probe.

According to another embodiment, it is proposed a measuring process for measuring a size of a piece, using a portable probe and/ or a measuring equipment.

The process comprises : placing the piece to measure on a table, a peripheral surface of the piece abutting positioning stops and a sensor finger of an electro-mechanical probe ; placing the portable probe unit on the piece, the front face of the body of this unit being in contact with a surface of the piece and this unit being maintained on the piece under the effect of the magnet of this unit ; a size signal issued from the electro-mechanical probe and a temperature signal issued from the unit being transmitted to a computer.

The process can comprise : previously, placing a sample piece on the table, in the same place than the piece to measure, a reference size signal issued from the electro-mechanical probe and a reference temperature signal issued from the unit being acquired by the computer, the computer being implemented for calculating a size of the piece to measure by taking in account the reference size signal and the reference temperature signal of the sample piece and the size signal and the temperature signal of the piece to measure.

The piece can be a ring of a bearing, a radial face of this ring being placed on the table, the peripheral surface of this ring abutting the positioning stops and the sensor finger of the electro-mechanical probe and the portable probe unit being placed on the opposed radial face of this ring.

The present invention and its advantages will be better understood by studying a portable probe unit, given by way of nonlimiting example and illustrated by the appended drawings on which:
- Figure 1 is an axial cross-section of a probe unit, in a released position ;
- Figure 2 is an axial cross-section of the probe unit of figure 1, in a coupled position with a piece ; and
- Figure 3 is a top view of a measuring equipment using the probe unit of figures 1 and 2.

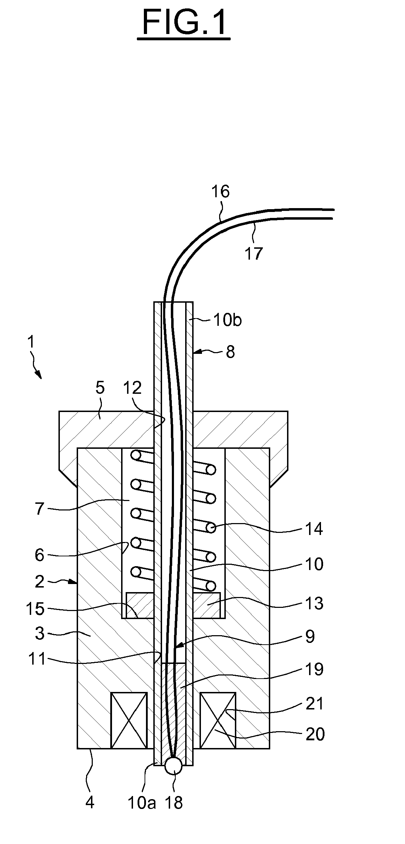

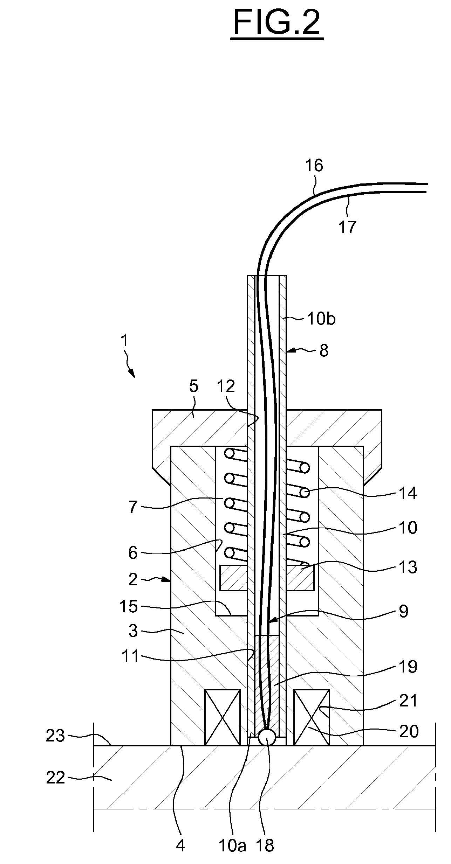

As illustrated on the figures 1 and 2, a portable probe unit 1 comprises a cylindrical body 2 comprising a cylinder 3 having a radial end front face 4 and a radial cover 5 opposite to this front face 4 and fixed to the opposite end of the cylinder 3.

The cylinder 3 has a central cylindrical recess 6 opposite to the front face 4 such that the cylinder 3 and the cover 5 delimit a cylindrical cavity 7.

The probe unit 1 comprises an axial carrier 8 mounted movable guided axially through the cylindrical body 2 and carrying a temperature probe 9.

The carrier 8 comprises an axial tube 10 which is movable and guided axially in axial passages 11 and 12 of the cylinder 3 and the cover 5 and which extends axially through the cavity 7.

The tube 10 is provided with an annular ring 13 in the cavity 7. A spiral return spring 14 is installed in the cavity 7, around the tube 10 and between the annular ring 13 and the cover 5. This spring 14 solicits the annular ring 13 towards the bottom 15 of the recess 7.

As illustrated on the figure 1, when the ring 13 abuts the bottom 15 under the effect of the return spring 14, the tube 10 is in a released position in which the end 10a of the tube 10 is located in the region of the front face 4 of the body 2. For example, the end 10a can be located axially beyond the front face 4.

The temperature probe 9 can be a thermocouple which comprises two flexible wires 16 and 17 of different metals and a hot junction formed by a welding drop 18 which connects adjacent ends of the wires 16 and 17, the welding drop 18 constituting a temperature sensor.

The wires 16 and 17 extend in the tube 1 in proximity to one another such that the welding drop 18 is located in the region of the end 10a of the tube 10 and has at least a part situated axially beyond the end 10a of the tube 10, while the wires 16 and 17 extend beyond the other end 10b of the tube 10 to be connected to a measure device (not shown).

The end portions of the wires 16 and 17 adjacent to the welding drop 18 and the welding drop 18, partially, are maintained in the end portion of the tube 10 by an encapsulating material 19, such as an epoxy resin.

In the said released position, the welding drop 18 is always axially beyond the front face 4 of the body 2.

The body 2 is equipped with a magnet 20, which is installed inner an annular recess 21 formed in the cylinder 3 from the front face 4. According to an alternative embodiment, the magnet 20 can comprise magnet portions installed inner recesses spaced circumferentially.

A user can take the body 2 of the portable probe unit 1 between his fingers and, as illustrated on the figure 2, the portable probe unit 1 can be closed to and placed on a piece 22 made of a magnetic material, in a coupled position in which the front face 4 of the body 3 is in contact on a flat surface 23 of the piece 22, at least partially, the portable probe unit 1 being maintained in this coupled position under the effect of the magnet 20.

In the coupled position, the tube 10 is pushed, the ring 13 is at a distance from the bottom 15 of the cavity 7 and the welding drop 18 is maintained in local contact with the surface 23 of the piece 22 under the effect of the return spring 14.

In the coupled position, the welding drop 18 gets to the temperature of the piece 22 and the temperature probe 9 can be used for the measure of the temperature of the piece 22.

When the operation of measurement is accomplished, the user can take again the body 2 of the portable probe unit 1 and separates the last from the piece 22.

The adherence force created by the magnet 20 is sufficient for maintaining firmly the probe unit 1 in contact with the piece 22, against the force applied by the spring 14 for obtaining a sure contact between the drop 18 and the piece 22. Nevertheless, this adherence force is not too high and is adapted to permit the normal user to separate the probe unit 1 from the piece by snatching or taking off.

The portable probe unit 1 can be used in factories of production of bearings, during automatic processes of determination by calculation of sizes of rings for such bearings

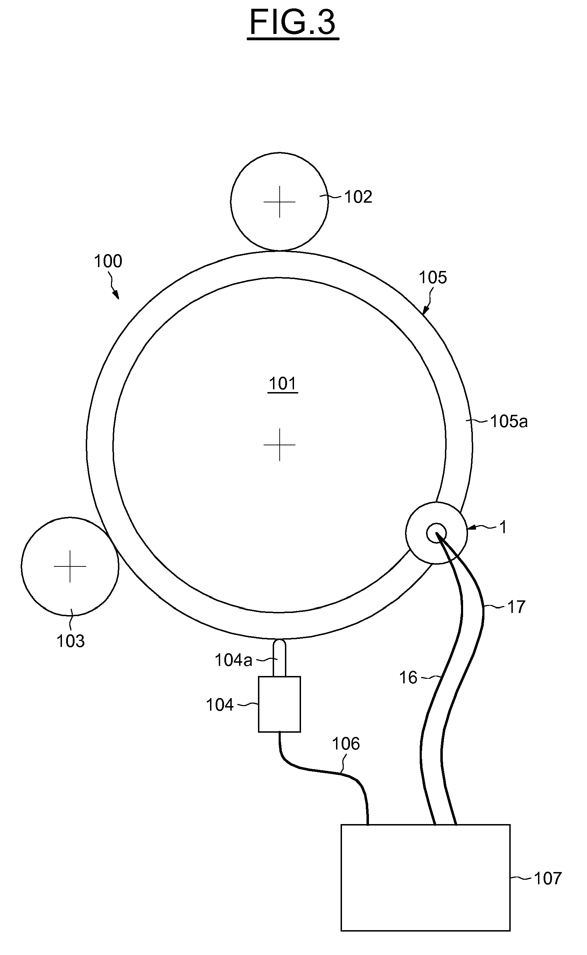

As illustrated on the figure 3, a measuring equipment 100 comprises, on a table 101, two rotating positioning stops 102 and 103 and an electro-mechanical probe 104, which are adjustably mounted on the table 101.

A ring 105 to be measured can be placed flat on the table 101 in such a position that a radial face of the ring is in contact with the table 101 and the peripheral surface 105a of the ring 105 abuts the positioning stops 102 and 103 and a sensor finger 104a of the electro-mechanical probe 104, the positioning stops 102 and the sensor finger 104a being adjusted to be in contact with the ring 105 in diametrically opposed positions.

A portable probe unit 1 can be placed on the upper radial face of the ring 105, as above described.

The wires 16 and 17 of the portable probe unit 1 and a connecting cable 106 of the electro-mechanical probe 104 are connected to a computer 107 which comprises input means and display means and which includes a program of calculation.

In a first step, a user introduces in the computer 107 the nominal diameter of a reference ring 105 at a reference temperature, for example 20°C.

In a second step, the user places a reference ring sample 105(R) on the table 101 as previously described and places the portable probe unit 1 on this sample as previously described.

In a third step, the user presses a bottom of the computer 107 for memorized the values issued from the portable probe unit 1 and the electro-mechanical probe 104, as reference values associated to the reference ring sample 105(R).

After that, in a fourth step, the user removes the reference ring sample 105(R) and places a ring 105(n) to be measured and places the portable probe unit 1 on this ring 105(n).

In a fifth step, the user presses a bottom of the computer 107 for memorized the values issued from the portable probe unit 1 and the electro-mechanical probe 104, as measured values associated to the ring 105(n) to be measured.

After that, the computer 107 calculates the diameter of the ring 105(n) to be measured, by using a previously programmed formula taking in account the coefficient of expansion of the ring metal and deliveries the value the diameter on the display means.

After that, the user can successively place, on the measuring equipment 100, other rings 105(n) to be measured and executes the measurement as above-described.

## Claims

1. A portable probe unit comprising :
a temperature probe (9) having a temperature sensor (18),
a body (2) having a front face (4) and equipped with a magnet (20) able to couple the body with a piece (22) of a magnetic material and to maintain, in a coupled position, the front face (4) of the body (2) in contact on a surface (23) of the piece (22), and
a carrier (8) mounted movable with respect to the body (23) and carrying the temperature probe (9) in such a way that, in said coupled position, the temperature sensor (18) is in contact on the piece (22) under the effect of a spring means (14) installed between said movable carrier (8) and said body (2).

2. A unit according to claim 1, in which said body (2) and said carrier (8) comprise abutting means (13, 15), which abut under the effect of the spring means (14) when said body (2) is in a released position in which the temperature sensor (18) extends beyond the said front face (4) of said body (2).

3. A unit according to claims 1 or 2, in which the carrier (8) is mounted for sliding with respect to said body (2).

4. A unit according to anyone of the preceding claims, in which said carrier (8) comprises a tube (10) mounted for sliding along a passage (11, 12) of said body (2), the temperature probe (9) extending in said tube and the temperature sensor (18) being maintained by an encapsulating material (19) in said tube.

5. A unit according to claim 4, in which the temperature sensor (18) extends at least partially beyond one end (10a) of said tube (10).

6. A unit according to one the preceding claims 4 or 5, in which said body (2) comprises a cavity (7) in which said spring means (14) is installed around said tube (10).

7. A unit according to anyone of the preceding claims 4 to 6, in which said temperature sensor (18) is a welding drop (18) connected wires (16,17) of a thermocouple, these wires extending in said tube.

8. A measuring equipment comprising, on a table (101), two positioning stops (102, 103) and an electro-mechanical probe (104), a ring (105) being able to be placed on the table in a position such that a peripheral surface of the ring is in contact with said positioning stops (102) and (103) and the electro-mechanical probe (104), and comprising a portable probe unit (1) according to anyone of the precedent claims, able to be coupled to the ring (105) in such a position that said temperature sensor (18) is in contact with a radial face of the ring, the equipment comprising further a computer (107) connected to said temperature probe (9) and said electro-mechanical probe (104).

9. A measuring process for measuring a size of a piece, using the portable probe unit of anyone of the preceding claims 1 to 7 and/or the measuring equipment of claim 8, comprising :
placing the piece to measure on a table, a peripheral surface (105a) of the piece (105) abutting positioning stops (102, 103) and a sensor finger (104a) of an electro-mechanical probe (104) ;
placing the portable probe unit on the piece, the front face (4) of the body (2) of this unit being in contact with a surface of the piece and this unit being maintained on the piece under the effect of the magnet (20) of this unit ;
a size signal issued from the electro-mechanical probe (104) and a temperature signal issued from the unit being transmitted to a computer (107).

10. Process according to claim 9, comprising : previously, placing a sample piece on the table, in the same place than the piece to measure, a reference size signal issued from the electro-mechanical probe and a reference temperature signal issued from the unit being acquired by the computer ; the computer being implemented for calculating a size of the piece to measure by taking in account the reference size signal and the reference temperature signal of the sample piece and the size signal and the temperature signal of the piece to measure.

11. Process according to claim 9 or 10, in which the piece is a ring of a bearing, a radial face of this ring being placed on the table, the peripheral surface of this ring abutting the positioning stops and the sensor finger of the electro-mechanical probe and the portable probe unit being placed on the opposed radial face of this ring.
